# DEMANDE DE BREVET EUROPEEN

(11) **EP 2 034 702 A1**
(43) Date de publication de la demande: **11.03.2009**
(21) Numéro de dépôt: 07291065.6
(22) Date de dépôt: 04.09.2007
(51) Int. Cl.: H04M 1/05, H04M 1/60, H04R 1/10

(54) **Dispositif de communication téléphonique sans fil comportant un organe de reproduction sonore lié de manière amovible à un connecteur**

(71) Demandeur: Modelabs Technologies Limited, Hong Kong (HK)
(72) Inventeur: Francois, Damien, 75017 Paris (FR)
(74) Mandataire: Kedinger, Jean-Paul

(57) **Abrégé**

La présente invention se rapporte à un dispositif portable de communication téléphonique sans fil (10) tel qu'une oreillette, destiné à être disposé au voisinage de l'oreille d'un utilisateur et comportant :
- un boîtier creux (12) destiné à loger des composants nécessaires au fonctionnement dudit dispositif,
- un connecteur (15), lié au boîtier creux (12) et conçu pour pouvoir brancher un équipement électrique ou électronique annexe, par exemple un ordinateur, un socle de chargement électrique, ou un téléphone cellulaire, et
- un organe de reproduction sonore (16) lié au boîtier creux (12) et destiné à être disposé à proximité immédiate du pavillon de l'oreille de l'utilisateur,

caractérisé en ce que l'organe de reproduction sonore (16) est relié de manière amovible au connecteur (15) de manière à créer une liaison permettant de transmettre un signal sonore du boîtier creux (12) vers ledit organe de reproduction sonore (16).

## Description

La présente invention concerne un dispositif portable de communication téléphonique sans fil, tel qu'une oreillette, destiné à être disposé contre ou dans l'oreille d'un utilisateur et comportant un organe de reproduction sonore et un connecteur.

Actuellement, les oreillettes jumelées avec un téléphone cellulaire par l'intermédiaire d'une liaison sans fil de type Bluetooth comporte généralement un haut-parleur solidaire de la coque externe de l'oreillette. Le haut-parleur occupe dont un volume non négligeable ce qui peut poser des problèmes lors du rangement de l'oreille dans un sac. De plus, certaines oreillettes sont munies d'un connecteur de type USB. Or, ce connecteur est bien souvent mal placé ou peu pratique. Ses fonctionnalités sont également très réduites.

Un but de la présente invention est donc de résoudre le problème cité précédemment à l'aide d'une solution simple à mettre en oeuvre, fiable et peu coûteuse.

Ainsi, la présente invention a pour objet un dispositif portable de communication téléphonique sans fil tel qu'une oreillette, destiné à être disposé au voisinage de l'oreille d'un utilisateur et comportant :
- un boîtier creux destiné à loger des composants nécessaires au fonctionnement dudit dispositif,
- un connecteur, lié au boîtier et conçu pour pouvoir brancher un équipement électrique ou électronique annexe, par exemple un ordinateur, un socle de chargement électrique, ou un téléphone cellulaire, et
- un organe de reproduction sonore lié au boîtier creux et destiné à être disposé à proximité immédiate du pavillon de l'oreille de l'utilisateur,
ledit dispositif étant caractérisé en ce que l'organe de reproduction sonore est relié de manière amovible au connecteur de manière à créer une liaison permettant de transmettre un signal sonore du corps vers ledit organe de reproduction sonore.

Selon des modes de réalisation préférés, le dispositif selon la présente invention peut comprendre en outre l'une au moins des caractéristiques suivantes :
- l'organe de reproduction sonore est fixé sur un support adapté pour se brancher sur le connecteur ;
- l'organe de reproduction sonore est un haut-parleur dressé perpendiculairement sur une face du support, ledit haut-parleur ayant une forme de champignon adaptée pour que ce qu'il puisse être inséré à l'entrée du conduit auditif de l'utilisateur ;
- le connecteur présente deux faces, une première pour le branchement de l'organe de reproduction sonore et une seconde, opposée à la première, pour le branchement de l'équipement annexe ; et
- le connecteur est un connecteur mâle de type USB et l'organe de reproduction sonore comporte un connecteur femelle correspondant de type USB.

Avantageusement, l'appareil de communication téléphonique sans fil est une oreillette à la norme Bluetooth.

L'invention va maintenant être décrite plus en détail en référence à des modes de réalisation particuliers donnés à titre d'illustration uniquement et représentés sur les figures annexées dans lesquelles :
- la figure 1 est une vue en perspective de dos du dispositif conforme à la présente invention ;
- la figure 2 est une vue en perspective de face du dispositif ;
- la figure 3 est une vue en perspective éclatée du dispositif ; et
- la figure 4 est une vue de dessus du dispositif.

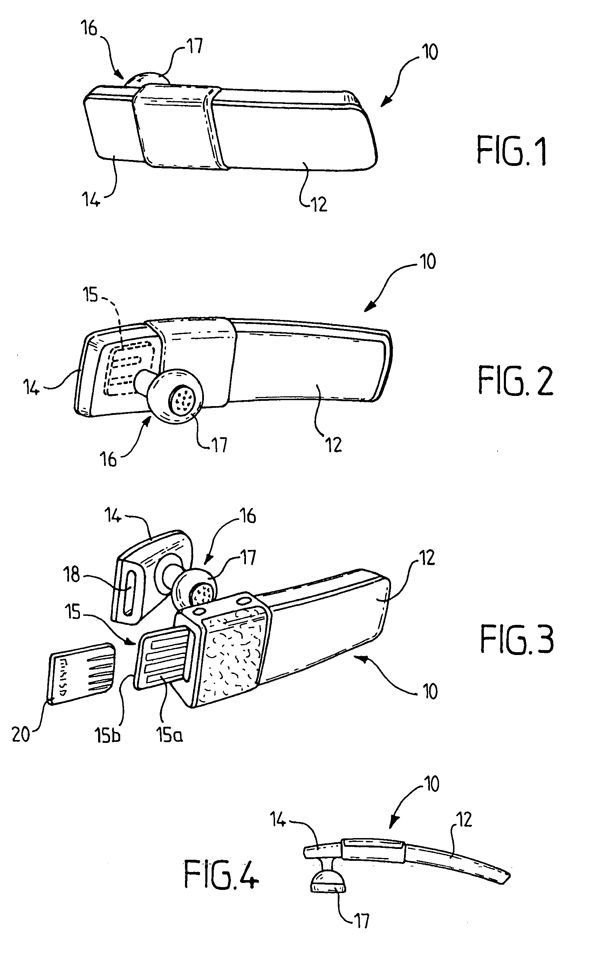

La figure 1 représente un dispositif portable de communication téléphonique sans fil 10 tel qu'une oreillette fonctionnant selon la norme Bluetooth afin de pouvoir être jumelé avec un téléphone cellulaire (non représenté).

Cette oreillette 10 comporte un boîtier creux 12 et un support 14 adapté pour pouvoir être liée au boîtier creux 12, dans le prolongement de ce dernier afin d'obtenir une forme ergonomique légèrement courbe (cf. figure 4).

Le boîtier 12 renferme les composants électroniques habituels (non représentés) nécessaires au bon fonctionnement de l'oreillette 10.

Le boîtier 12 comporte également des boutons et voyants de fonctionnement ainsi qu'un microphone, ces éléments n'étant ni représentés ni référencés.

Enfin, le boîtier 12 est muni d'un connecteur 15, dans le cas présent une prise mâle de type USB (Universal Serial Bus) permettant par exemple de connecter l'oreillette 10 à un équipement annexe tel qu'un socle de chargement en énergie électrique, un téléphone cellulaire, ou un ordinateur.

Le support 14 est muni d'un organe de reproduction sonore 16 destiné à émettre par exemple une sonnerie, un son de commande ou les appels téléphoniques entrants et sortants. Cet organe de reproduction sonore 16 se présente sous la forme d'un haut-parleur 17 en forme de champignon faisant saillie sensiblement perpendiculairement sur le support 14 de sorte qu'il puisse être inséré à l'entrée du conduit auditif de l'utilisateur.

Le support 14 comporte également un connecteur femelle 18 de type USB coopérant avec le connecteur mâle 15 du boîtier creux 12.

En effet, lorsque le connecteur femelle 18 est branché sur le connecteur mâle 15, une liaison électrique est créée et permet de transmettre le signal sonore des composants électroniques de l'oreillette 10 jusqu'au haut-parleur 17 afin que ce signal soit émis dans l'oreille de l'utilisateur (non représenté).

Ainsi, le connecteur mâle 15 permet d'une part de brancher le haut-parleur 17 mais également de recharger l'oreillette 10 ou de la relier à un ordinateur ou un téléphone cellulaire. Le haut-parleur 17 et le connecteur mâle 15 sont liés de manière amovible l'un à l'autre, tout comme le sont le boîtier creux 12 et le support 14.

Selon une variante de réalisation, le connecteur mâle 15 peut également servir de port de connexion pour une carte mémoire 20 (figure 3).

Le connecteur mâle 15 est conçu de telle façon qu'une face 15a porte des broches pour la liaison électrique entre les composants électroniques et le haut-parleur 17, tandis que l'autre face 15b comporte des broches de type USB pour la connexion de l'équipement annexe.

Il va de soi que la description détaillée de l'objet de l'Invention, donnée uniquement à titre d'illustration, ne constitue en aucune manière une limitation, les équivalents techniques étant également compris dans le champ de la présente invention.

## Revendications

1. Dispositif portable de communication téléphonique sans fil (10) tel qu'une oreillette, destiné à être disposé au voisinage de l'oreille d'un utilisateur et comportant :
- un boîtier creux (12) destiné à loger des composants nécessaires au fonctionnement dudit dispositif,
- un connecteur (15), lié au boîtier creux (12) et conçu pour pouvoir brancher un équipement électrique ou électronique annexe, par exemple un ordinateur, un socle de chargement électrique, ou un téléphone cellulaire, et
- un organe de reproduction sonore (16) lié au boîtier creux (12) et destiné à être disposé à proximité immédiate du pavillon de l'oreille de l'utilisateur,
**caractérisé en ce que** l'organe de reproduction sonore (16) est relié de manière amovible au connecteur (15) de manière à créer une liaison permettant de transmettre un signal sonore du boîtier creux (12) vers ledit organe de reproduction sonore (16).

2. Dispositif selon la revendication 1, **caractérisé en ce que** l'organe de reproduction sonore (16) est fixé sur un support (14) adapté pour se brancher sur le connecteur (15).

3. Dispositif selon la revendication 2, **caractérisé en ce que** l'organe de reproduction sonore (16) est un haut-parleur (17) dressé perpendiculairement sur une face du support (14), ledit haut-parleur (17) ayant une forme de champignon adaptée pour que qu'il puisse être inséré à l'entrée du conduit auditif de l'utilisateur.

4. Dispositif selon l'une quelconque des revendications précédentes, **caractérisé en ce que** le connecteur (15) présente deux faces (15a, 15b), une première (15a) pour le branchement de l'organe de reproduction sonore (16) et une seconde (15b), opposée à la première, pour le branchement de l'équipement annexe.

5. Dispositif selon l'une quelconque des revendications précédentes, **caractérisé en ce que** le connecteur (15) est un connecteur mâle de type USB et l'organe de reproduction sonore (16) comporte un connecteur femelle (18) correspondant de type USB.

6. Dispositif selon l'une quelconque des revendications précédentes, **caractérisé en ce qu'**il s'agit d'une oreillette à la norme Bluetooth.
